# FASCICULE DE BREVET EUROPEEN

(11) **EP 2 492 334 B1**
(45) Date de publication et mention de la délivrance du brevet: **20.05.2015**
(21) Numéro de dépôt: 12156358.9
(22) Date de dépôt: 21.02.2012
(51) Int. Cl.: C09K 5/06, F28D 20/02

(54) **Utilisation de composés à groupes fonctionnels azotés pour le stockage d'énergie thermique**
Verwendung von Verbindungen mit funktionellen Stickstoffgruppen für die Speicherung von Wärmeenergie
Use of compounds with nitrogen functional groups for storing thermal energy

(30) Priorité: 25.02.2011 FR 1151530
(43) Date de publication de la demande: 29.08.2012
(73) Titulaire: Arkema France, 92700 Colombes (FR)
(72) Inventeur: Hidalgo, Manuel, 69530 Brignais (FR); Gillet, Jean-Philippe, 69530 Brignais (FR); Barreto, Gilles, 69510 Messimy (FR); Mantisi, Frederick, 69005 Lyon (FR)

(56) Documents cités:
- EP-A1- 0 094 366
- DE-A1-102007 002 796
- US-A- 5 755 988
- US-A1- 2005 208 286
- A M USMANI: "Phase change clathrate materials for energy storage", JOURNAL OF MATERIALS SCIENCE LETTERS, vol. 2, no. 11, 1 janvier 1983 (1983-01-01), pages 681-682, XP055009173, DOI: 10.1007/BF00720400

## Description

La présente invention se rapporte à l'utilisation de composés à groupes fonctionnels azotés pour le stockage d'énergie thermique.

Les matériaux à changement de phase (ou MCP) sont des matériaux capables de stocker de l'énergie de manière latente lors d'un changement d'état physique réversible. La densité énergétique et la compacité des éléments de stockage d'énergie fabriqués à partir de ces matériaux les rendent nettement plus compétitifs que les matériaux de stockage par chaleur sensible, qui stockent l'énergie sous forme d'une élévation de leur température (sans changement de phase).

Précisément, les MCP ont la capacité d'absorber une certaine quantité de chaleur lorsqu'ils passent d'un état physique à un autre, généralement lors de leur fusion, avec une modification modérée de leur température et de celle de leur environnement, et de restituer de la chaleur en reprenant leur état physique d'origine, notamment en recristallisant. Ces matériaux sont d'autant plus intéressants que la quantité de chaleur échangée pendant ces changements de phase, est grande. Dans le cas d'une transition solide/liquide, celle-ci est exprimée par leur enthalpie de fusion ou de cristallisation. Les températures de fusion et de cristallisation des MCP déterminent par ailleurs leurs applications possibles. Parmi celles-ci, on peut citer le refroidissement de produits alimentaires ou de produits pharmaceutiques sensibles à la chaleur, de matériaux textiles, de moteurs, de composants et circuits électroniques ou d'installations de combustion de déchets. A l'échelle industrielle, les MCP constituent également un moyen pour récupérer la chaleur dégagée ou disponible contenue dans des récipients ou équipements (comme des réacteurs chimiques, des générateurs d'énergie électrique ou mécanique) ou dans des courants ou fluides de « process » (par exemple des circuits de refroidissement/chauffage, des effluents), notamment lors de certaines réactions chimiques exothermiques. La chaleur dégagée peut ensuite être réutilisée pour apporter de l'énergie à d'autres réactions, ce qui permet de réduire la consommation industrielle d'énergie fossile ou électrique. L'utilisation des MCP dans des cycles de climatisation (chauffage/refroidissement) est également un exemple d'application où l'on peut efficacement stocker de l'énergie thermique pour la restituer ensuite en temps et quantité voulus.

Le matériau MCP le plus courant n'est autre que l'eau. Lors de sa transition solide/liquide (et donc implicitement liquide/solide), elle permet d'absorber ou de libérer des quantités importantes de chaleur. C'est ainsi que des bacs ou des piscines d'eau à une température proche de 0°C, libre (sous forme de mélange glace/eau liquide) ou encapsulée, par exemple dans des boules en plastique ou autres matériaux, constituent un exemple simple d'un système MCP capable de stocker (lors de la fusion de la glace) et de restituer (lors de la cristallisation de l'eau liquide) d'importantes quantités d'énergie par unité de masse d'eau. Cependant, l'eau, bien qu'abondante, disponible, pas toxique, ne peut pas résoudre tous les problèmes possibles en matière d'efficacité d'échange thermique du fait de son domaine restreint d'utilisation (vers 0°C) et des problèmes liés à la forte expansion volumique de la glace lors de sa formation.

D'autres MCP courants comprennent les paraffines et les acides gras, tels que l'acide dodécanoïque, utilisés pour la climatisation des bâtiments, les sels hydratés tels que Mn(NO₃)₂.H₂O, MnCl₂.H₂O, Na₂S₂O₃.5H₂O et CH₂COONa.3H₂O, et les mélanges eutectiques, notamment d'acide caprique et d'acide laurique. Ces composés ont généralement des températures de fusion assez basses, allant de 15 à 48°C environ. Autour de 150°C, on connaît l'acide adipique (C₆H₁₀O₄, 152°C) ou le maltitol (C₁₂H₂₄O₁₁, 145°C) et pour des températures de fusion voisines de 300°C, les MCP connus sont par exemple des sels tels que NaNO₃ (307°C), KNO₃ (333°C). Ces MCP présentent toutefois de nombreux inconvénients freinant leur développement industriel. En particulier, les MCP organiques peuvent être inflammables, présenter une faible conductivité thermique à l'état solide, nécessiter d'importants transferts de chaleur durant le cycle de gel, et présenter une faible chaleur latente volumétrique. Par ailleurs, les paraffines peuvent poser des problèmes d'approvisionnement, de coût et de génération de CO₂ en raison de leur origine pétrolière. Les MCP inorganiques génèrent, de leur côté, des phénomènes de surfusion importants. En outre, leurs températures de transition de phase ne sont pas constantes du fait, notamment, de leur hygroscopie. Enfin, ils sont susceptibles d'entraîner une corrosion des métaux avec lesquels ils sont en contact, ce qui entraîne des coûts de maintenance inacceptables.

Pour palier certains des inconvénients précités, il a été proposé d'utiliser des cires végétales ou animales, telles que la cire d'abeille, des alcools de sucre tels que l'érythritol, et des acides ou diacides gras linéaires d'origine végétale qui offrent un choix de températures de transition (de 20 à 155°C) et de chaleur latente de fusion (de 140 à 240 J/g) en fonction de leur longueur de chaîne, de leur degré d'insaturation et de leurs fonctions acides, liées à leur cristallinité. (voir Investigation of Phase Change Materials for Elevated Temperatures, J. Waschull, R. Müller and S. Römer, Institute for Air Conditioning and Refrigeration Dresden (ILK Dresden), Stockton University, Energy studies, 2009)

Par ailleurs, certains matériaux aminés ont été décrits comme MCP. Il s'agit en particulier des clathrates constitués de N,N,N',N'-tétraméthyléthylène diamine quaternisée et de N,N,N',N'-tétraméthyl-1,6-hexanediamine quaternisée décrits par USMANI A. dans Journal of Materials Science Letters, 2 (1983) 681-682, qui ont un point de fusion de 0 à 31°C, et des adduits d'acide formique et de N,N,N',N'-tétraméthyléthylène diamine décrits par SALMAN M. et al dans Journal of Thermal Analysis, Vol. 37 (1991) 2389-2394. Le premier de ces adduits, A4B, a une température de fusion de 18°C tandis que le second, A2B, a une température de fusion de 60°C mais est présenté comme thermiquement instable. Le document EP 0 094 366 divulgue en outre un système de stockage d'énergie thermique utilisant un MCP constitué d'une diamine de formule H₂N-(CH₂)ₙ-NH₂ où n est un entier allant de 4 à 14. Ces composés ont des températures de fusion de 16 à 73°C environ mais ils présentent également une mauvaise stabilité thermique se traduisant par une perte d'efficacité de stockage de la chaleur.

On connaît par ailleurs de US 2005/208286 un composite polymérique comprenant un MCP éventuellement encapsulé, un dispersant polymérique et éventuellement une matrice polymérique, destiné à la fabrication de fibres synthétiques. Le MCP peut être choisi parmi une large gamme de composés, tels que des diacides, des polymères dont certains peuvent être issus de monomères azotés et préférentiellement des hydrocarbures. Cependant, les polymères ne constituent pas de bons MCP car ils présentent une chaîne principale trop longue pour permettre d'obtenir une énergie de transition de phase élevée.

On connaît de DE 10 2007 002796 des MCP à base d'amides, telles que l'éthylène-bis-stéaramide. Cependant, du fait de leur agencement cristallographique, ces composés ne permettent pas un bon compromis entre l'obtention d'une température de fusion élevée et l'obtention d'une énergie de transition de phase élevée.

Le document US 5 755 988 enseigne quant à lui l'utilisation d'un diacide, tel que l'acide sébacique, comme MCP. Les inventeurs ont constaté que ce composé est trop volatile et a tendance à se dégrader à haute température, notamment dans la plage 150-200°C, ce qui le rend inapproprié pour être utilisé comme MCP dans certaines applications.

Il subsiste par conséquent le besoin de disposer de MCP d'origine renouvelable, présentant une température de fusion comprise entre 0° et 250°C et de préférence entre 25°C et 240°C, qui soient stables thermiquement, c'est-à-dire capables de subir un grand nombre de cycles de fusion/solidification sans se dégrader et de fondre et cristalliser dans une plage de températures étroite et constante au cours des cycles. Il serait en outre souhaitable que ces composés présentent des enthalpies de fusion et de cristallisation élevées et une faible inflammabilité.

Les inventeurs ont découvert que certains composés azotés difonctionnels, en particulier des dérivés de bisamides, permettaient de satisfaire ces besoins.

Certains de ces composés sont déjà connus comme promoteurs d'adhésion en milieu humide, notamment dans des peintures latex (EP 0 928 820), ou comme polymères supramoléculaires utilisables comme additifs dans la fabrication de colles thermofusibles ou de revêtements, notamment (FR 2 905 698). Toutefois, à la connaissance des inventeurs, leurs propriétés d'absorption /restitution de chaleur n'ont encore jamais été évaluées, de sorte qu'il n'a encore jamais été envisagé de les utiliser pour le stockage d'énergie thermique.

La présente invention a donc pour objet l'utilisation d'un composé constitué d'une chaîne hydrocarbonée linéaire en C₈-C₂₄ (renfermant de préférence de 10 à 18 atomes de carbone) portant à chaque extrémité un groupe fonctionnel azoté, autre que -NH₂, pour le stockage d'énergie thermique.

Dans une première variante de l'invention, ce composé peut ainsi être choisi parmi les bisamides de formule (I) _{:}
R₁R₂N-CO-(CH₂)ₙ-CO-NR₁R₂ (I)
où n est un entier allant de 6 à 24 et R₁, R₂ désignent indépendamment un atome d'hydrogène ; un groupe alkyle en C₁₋C₁₀; un groupe Ra-N-RbRc où Ra est une chaîne -(CH₂)ₓ-(NH-CH₂-CH₂)ₘ- où m est un entier allant de 0 à 6, x est un entier allant de 1 à 4 et Rb, Rc sont chacun H ou forment ensemble et avec l'atome d'azote auquel ils sont reliés un hétérocyclé azoté éventuellement interrompu par au moins un autre atome d'azote et éventuellement substitué par un groupe oxo. Des exemples d'hétéocycles azotés comprennent les hétérocycles diazotés et triazotés et plus particulièrement les groupes imidazolidonyle et uréido-pyrimidyle.

Selon une forme d'exécution préférée de l'invention, n est un entier allant de 8 à 16, R₁ = H et R₂ = Ra-N-RbRc où Ra est une chaîne -CH₂-CH₂- et Rb, Rc forment un hétérocycle diazoté saturé à cinq ou six chaînons avec l'atome d'azote auxquels ils sont reliés, de préférence un groupe imidazolidonyle. De façon plus préférée encore, le composé utilisé selon l'invention est le bisamide du 2-aminoéthylimidazolidinone ou 1-(2-aminoéthyl) imidazolidin-2-one (ci-après, "UDETA") et d'un acide dicarboxylique d'origine végétale, renfermant avantageusement de 10 à 18 atomes de carbone.

Selon une autre forme d'exécution de l'invention, n est un entier allant de 6 à 20, de préférence de 8 à 16, R₁ = H et R₂ = H. On peut citer par exemple le 1,8-octanediamide (subériçamide), le 1,10-décanediamide (sébaçamide), le 1,12-dodécanediamide, le 1,14-tétradécanediamide, le 1,16-hexadécanediamide, le 1,18-octadécanediamide, le 1,20-eicosanediamide et leurs mélanges, le 1,10-décanediamide étant davantage préféré.

D'une manière générale, les dérivés bisamides sont obtenus par réaction d'un diacide gras HOOC-(CH₂)ₙ-COOH sur une amine NHR₁R₂ à des températures supérieures à 100°C, de telle sorte que l'eau formée distille à partir du milieu réactionnel. De façon générale, on opère sans solvant mais il n'y a pas d'obstacle à en utiliser un s'il est adapté aux conditions opératoires.

Dans une seconde variante, le composé utilisé selon l'invention peut être choisi parmi les dinitriles de formule (II) _{:} N≡C-(CH₂ₚ-C≡N (II) où p est un entier allant de 6 à 24, de préférence de 8 à 16.

Selon une forme d'exécution de l'invention, p est un entier allant de 6 à 20, de préférence de 8 à 16. On peut citer par exemple le 1,6-hexanedinitrile (subéronitrile), le 1,8-octanedinitrile (sébaçonitrile), le 1,10-décanedinitrile, le 1,12-dodécanedinitrile, le 1,14-tétradécanedinitrile, le 1-16-hexadécanedinitrile, le 1,18-octadécanedinitrile, 1,20-eicosanedinitrile et leurs mélanges. On préfère davantage le 1,8-octanedinitrile, le 1,12-dodécanedinitrile, le 1-16-hexadécanedinitrile et leurs mélanges.

D'une manière générale, les dinitriles sont obtenus par réaction d'un diacide gras HOOC-(CH₂)ₚ-COOH en présence d'ammoniac et d'un catalyseur tel que des oxydes de métaux. La réaction est opérée à des températures comprises entre 250°C et 450°C. Le diacide gras est transformé successivement en sels d'ammonium, en bisamides non substitués puis en dinitriles.

Comme exemple de diacides gras pouvant être utilisés on peut citer l'acide 1,8-octanedioïque (acide subérique), l'acide 1,10-décanedioïque (acide sébacique), l'acide 1,12-dodécanedioïque, l'acide 1,14-tétradécanedioïque, l'acide 1,16-hexadécanedioïque, l'acide 1,18-octadécanedioïque et leurs mélanges. On préfère davantage l'acide 1,10-décanedioïque, l'acide 1,14-tétradécanedioïque, l'acide 1,18-octadécanedioïque et leurs mélanges.

Dans une troisième variante, ce composé peut être choisi parmi les polyamines de formule (III) _{:}
R₃R₄N-(CH₂)_{q}-NR₃R₄ (III)
où q est un entier allant de 6 à 24, de préférence de 8 à 16 ; R₃ est un groupe propylamine, polypropylamine alkylcarbonyle ou alkylsulfonyle renfermant éventuellement un motif alcoxylé (CH₂-CH₂-O)_{y} ; et R₄ est H ou un groupe propylamine, polypropylamine alkylcarbonyle ou alkylsulfonyle renfermant éventuellement un motif alcoxylé (CH₂-CH₂-O)y où y est un entier allant de 1 à 6.

Des motifs alcoxylés préférés sont les motifs éthoxylés et propoxylés.

Comme exemples de polyamines répondant à la formule (III), on peut citer : la 1,8-octanediamine,N¹,N⁸-bis(3-aminopropyl), la 1,10-décanediamine,N¹,N¹⁰-bis(3-aminopropyl), la 1,12-dodécanediamine,N¹,N¹²-bis(3-aminopropyl), la 1,14-tétradécanediamine,N¹,N¹⁴-bis(3-aminopropyl), la 1,16-hexadécanediamine,N¹,N¹⁶-bis(3-aminopropyl), la 1,18-octadécanediamine,N¹,N¹⁸-bis(3-aminopropyl), la 1,20-eicosanediamine,N¹,N²⁰-bis(3-aminopropyl); la 1,8-octanediamine,N¹,N⁸-bis[1,3-propanediamine,N-(3-aminopropyl)], la 1,10-décanediamine,N¹,N¹⁰-bis[1,3-propanediamine,N-(3-aminopropyl)], la 1,12-dodécanediamine,N¹,N¹²-bis[1,3-propanediamine,N-(3-aminopropyl)], la 1,14-tétradécanediamine,N¹,N¹⁴-bis[1,3-propanediamine,N-(3-aminopropyl)], la 1,16-hexadécanediamine,N¹,N¹⁶-bis[1,3-propanediamine,N-(3-aminopropyl)], la 1,18-octadécanediamine,N¹,N¹⁸-bis[1,3-propanediamine,N-(3-aminopropyl)], la 1,20-eicosanediamine,N¹,N²⁰-bis[1,3-propanediamine,N-(3-aminopropyl)] ; la 1,8-octanediamine,N¹,N⁸-bis(acétyl), la 1,10-décanediamine,N¹,N¹⁰-bis(acétyl), la 1,12-dodécanediamine,N¹,N¹²-bis (acétyl), la 1,14-tétradécanediamine,N¹,N¹⁴-bis(acétyl), la 1, 16-hexadécanediamine,N¹,N¹⁶-bis(acétyl), la 1,18-octadécanediamine,N¹,N¹⁸-bis(acétyl), la 1,20-eicosanediamine,N¹,N²⁰-bis(acétyl); la 1,8-octanediamine,N¹,N⁸-bis(méthanesulfonyl), la 1,10-décanediamine,N¹,N¹⁰-bis(méthanesulfonyl), la 1,12-dodécanediamine,N¹,N¹²-bis(méthanesulfonyl), la 1,14-tétradécanediamine,N¹,N¹⁴-bis(méthanesulfonyl), la 1,16-hexadécanediamine,N¹,N¹⁶-bis(méthanesulfonyl), la 1,18-octadécanediamine,N¹,N¹⁸-bis(méthanesulfonyl), la 1,20-eicosanediamine,N¹,N²⁰-bis(méthanesulfonyl); la 1,8-octanediamine,N¹,N¹,N⁸,N⁸-tétra(2-hydroxyéthyl), la 1,10-décanediamine, N¹, N¹,N¹⁰,N¹⁰-tétra(2-hydroxyéthyl), la 1,12-dodécanediamine,N¹,N¹,N¹²,N¹²-tétra(2-hydroxyéthyl), la 1, 14-tétradécanediamine, N¹,N¹,N¹⁴,N¹⁴-tétra(2-hydroxyéthyl), la 1,16-hexadécanediamine,N¹,N¹,N¹⁶,N¹⁶-tétra(2-hydroxyéthyl), la 1, 18-octadécanediamine, N¹,N¹,N¹⁸,N¹⁸-tétra(2-hydroxyéthyl), la 1,20-eicosanediamine,N¹,N¹,N²⁰,N²⁰-tétra(2-hydroxyéthyl) ; et leurs mélanges.

D'une manière générale, les polyamines primaires sont obtenues de façon classique par hydrogénation des dinitriles cités précédemment. Les catalyseurs sont habituellement des nickel ou cobalt de Raney dopés ou non. La réaction peut être réalisée en milieu solvant ou non. Les polyamines sont obtenues par les séquences suivantes qui peuvent être répétées ou non plusieurs fois : addition de Michael de l'acrylonitrile sur la fonction amine initiale suivie d'une étape d'hydrogénation pour conduire au motif propyl amine.

Les composés précités, notamment les polyamines, peuvent être utilisés selon l'invention sous forme de sels organiques ou inorganiques, en particulier de leurs chlorures, sulfates, sulfonates, alkyléther sulfates, alkyléther sulfonates et alkyléther phosphates par exemple.

Les inventeurs ont mis en évidence que ces composés présentaient une combinaison de caractéristiques très avantageuses pour une utilisation dans le stockage d'énergie thermique, à savoir :
- une température de fusion, telle que mesurée par DSC, comprise entre 0 et 250°C, plus particulièrement entre 25 et 240°C et préférentiellement entre 175 et 200°C,
- éventuellement, une température de cristallisation, telle que mesurée par DSC, entre -25 et 240°C, plus particulièrement entre 0 et 230°C et préférentiellement entre 120 et 190°C,
- une enthalpie de fusion, telle que mesurée par DSC, d'au moins 100 J/g, plus particulièrement d'au moins 120 J/g voire d'au moins 135 J/g et allant par exemple jusqu'à 365 J/g,

- éventuellement, une enthalpie de cristallisation, telle que mesurée par DSC, d'au moins 80 J/g, plus particulièrement d'au moins 100 J/g et allant par exemple jusqu'à 365 J/g,
- une bonne stabilité thermique, se traduisant par une capacité à subir au moins 5 cycles, notamment au moins 10 cycles, voire au moins 50 cycles, de fusion/cristallisation successifs sans que :
   1- la variation de leur température de fusion au cours des cycles, telle que mesurée par DSC, n'excède 10% voire 5% et/ou
   2- la variation de leur température de cristallisation au cours des cycles, telle que mesurée par DSC, n'excède 10% voire 5%, et/ou
   3- la variation de leur enthalpie de fusion au cours des cycles, telle que mesurée par DSC, n'excède 20% voire 15%, et/ou
   4- la variation de leur enthalpie de cristallisation au cours des cycles, telle que mesurée par DSC, n'excède 10% voire 7%, et/ou
   5- leur perte de masse entre le premier et le dernier cycle n'excède 10%, de préférence 5%, voire 1%,
telles que mesurées, par exemple, en utilisant une vitesse de rampe (chauffage/refroidissement) pour la DSC allant de 1 à 20°C/min, notamment de 10°C/min.

Il est à noter que, dans cette description, l'expression "compris entre" doit être interprétée comme incluant les bornes citées.

Les composés décrits précédemment sont mis en oeuvre, dans la présente invention, sous forme d'un matériau susceptible de renfermer, outre ces composés, divers additifs, tels que du dioxyde de titane (matériau support permettant la réalisation de composite polymère) ou des agents de nucléation, voire d'autres matériaux à changement de phase avec lesquels ces composés sont susceptibles de former des mélanges eutectiques. En outre, dans ce matériau, les composés décrits précédemment peuvent se trouver sous forme encapsulée, par exemple dans une enveloppe à base de polymère de type polystyrène, de poly(alcool vinylique) ou de polyuréthane, ou inclus dans des fibres textiles synthétiques.

Ce matériau peut être utilisé notamment dans un dispositif adapté au refroidissement de produits alimentaires, de produits pharmaceutiques sensibles à la chaleur, de matériaux textiles, de moteurs ou de composants et circuits électroniques, à la récupération de chaleur de réacteurs chimiques ou d'installations de combustion de déchets ou au stockage d'énergie solaire. La chaleur absorbée par les composés utilisés selon l'invention peut ensuite être restituée pour permettre le réchauffage d'une paroi telle qu'une enceinte de réacteur chimique ou d'un fluide.

L'invention a donc également pour objet un procédé de stockage et éventuellement de restitution d'énergie thermique, comprenant la mise en contact d'une paroi à refroidir avec un premier fluide caloporteur puis la mise en contact dudit premier fluide caloporteur avec un matériau comprenant au moins un composé tel que décrit précédemment, et éventuellement la mise en contact dudit matériau avec un second fluide caloporteur puis éventuellement dudit second fluide caloporteur avec une paroi à réchauffer.

Dans ce procédé, le fluide caloporteur peut comprendre de l'air, de l'eau, un glycol, des saumures de sels conducteurs thermiquement, des huiles siliconées, des huiles issues du raffinage de coupes pétrolières, des huiles d'origine végétale, et leurs mélanges.

L'invention sera mieux comprise à la lumière des exemples suivants, donnés à des fins d'illustration seulement et qui n'ont pas pour but de restreindre la portée de l'invention, définie par les revendications annexées.

### EXEMPLES

### Exemple 1 : Synthèse de bisamides d'UDETA

On a préparé trois bisamides d'acides gras linéaires saturés et d'UDETA, selon le schéma réactionnel suivant :

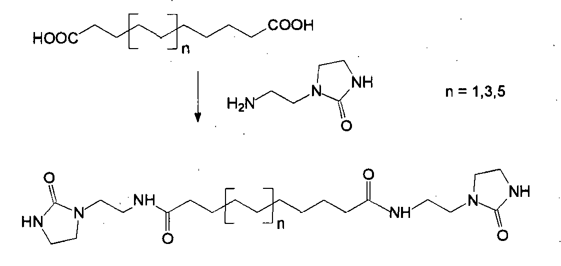

Pour ce faire, dans un réacteur préalablement séché de 500 cm³, muni d'une agitation mécanique type ancre, d'un chauffage, d'un réfrigérant de type Dean Stark, d'un système d'inertage à l'azote, on a chargé 0,5 M (157,25 g) d'acide octadécanedioïque. On a porté le milieu réactionnel à 170-180°C sous agitation et inertage à l'azote du ciel du réacteur. Il est possible de faire barboter de l'azote lorsque l'acide est fondu à plus de 130°C, afin de limiter la coloration finale. Puis on a coulé goutte-à-goutte 1M de 1-(2-aminoéthyl) imidazolidin-2-one [UDETA] fondue, de pureté 95%, dont la masse molaire équivalente a été déterminée par dosage de l'alcalinité totale (masse molaire théorique = 129 g/mol). On a maintenu la température entre 170 et 180°C jusqu'à la fin de la réaction. L'eau formée a été distillée au fur et à mesure. Lorsque la réaction était terminée, on a vidangé le produit à chaud dans un flacon de verre Schott. Le produit final a été caractérisé par son indice acide (IA) et son alcalinité totale.

On a préparé de la même manière un bisamide d'acide tétradécanedioïque et d'UDETA et un bisamide d'acide sébacique et d'UDETA.

### Exemple 2 : Analyse par DSC des bisamides d'UDETA

On a effectué des essais calorimétriques par DSC (calorimétrie différentielle à balayage) à l'aide d'un appareil de DSC Q10 de la société TA Instruments muni d'un bain de refroidissement permettant d'effectuer des balayages de température entre -70°C et la température supérieure choisie (250°C maximum pour les produits testés). Les essais ont été conduits avec des masses d'échantillons comprises entre 6 et 15 mg et en faisant varier les rampes de chauffe ou de refroidissement entre 1 et 20 °C/min, la valeur de 10°C/min étant la plus fréquemment utilisée. Des cycles de chauffage/refroidissement ont ainsi pu être conduits. Une première série de balayages entre -70°C et 250°C a permis d'identifier la zone des températures pendant laquelle les transitions de phase de fusion (au chauffage) et de cristallisation (au refroidissement) étaient observées. Cette première série a permis de montrer qu'aucun phénomène thermique de transition de phase n'était observé en-deçà de 50°C. Les cycles ont, par la suite été conduits à partir d'au moins 50°C.

### 2A - Essai sur 3 cycles à 10°C/min

Le Tableau I ci-dessous montre les valeurs des températures aux pics de fusion et de cristallisation pour les 3 diamides d'UDETA synthétisés à l'Exemple 1 (C18, C14, C10), lors des essais sur 3 cycles de chauffage/refroidissement à 10°C/min entre 50°C et 250°C. Les enthalpies de fusion et de cristallisation sont également données. Après les trois cycles, les pertes de masse ont été quantifiées par pesage de la capsule contenant l'échantillon et par différence de poids avec le poids initial avant l'essai. Les pertes de masse étaient respectivement de 0,2, 0,3 et 0,5 mg après trois cycles, pour les diamides en C18, C14 et C10.

**TABLEAU I**

| | Diamide UDETA en C18 | Diamide UDETA en C14 | Diamide UDETA en C10 |
|---|---|---|---|
| Températures de fusion au pic (°C) 1^{er}/2^{eme}/3^{eme} cycle | 178/177/177 | 187/181/180 | 199/195/195 |
| Températures de cristallisation au pic (°C) 1^{er}/2^{eme}/3^{eme} cycle | 149/148/147 | 144/142/140 | 127/126/124 |
| Enthalpies de fusion (J/g) 1^{er}/2^{eme}/3^{eme} cycle | 163/144/142 | 159/143/142 | 135/119/118 |
| Enthalpies de cristallisation (J/g) 1^{er}/2^{eme}/3^{eme} cycle | 135/135/133 | 131/126/125 | 100/101/97 |

Il est à noter que malgré des montées en température allant jusqu'à 250°C, les produits continuaient à fondre et à cristalliser de manière assez reproductible, ce qu'on peut voir notamment par la stabilité des températures des pics de fusion et de cristallisation et des valeurs d'enthalpies, en particulier en cristallisation. De plus, la perte de masse était pratiquement nulle (<1 mg) après ces cycles.

### 2B- Essai sur 5 cycles à 10°C/min

Le Tableau II montre les valeurs des températures aux pics de fusion et de cristallisation pour 2 des diamides d'UDETA synthétisés (C18, C14), lors des essais sur 5 cycles de chauffage/refroidissement à 10°C/min entre 50°C et 250°C. Les enthalpies de fusion et de cristallisation sont également données. Après les cinq cycles, les pertes de masse ont été quantifiées par pesage de la capsule contenant l'échantillon et par différence de poids avec le poids initial avant l'essai. Les pertes de masse étaient respectivement de 0 et 0,3 mg après cinq cycles, pour les diamides en C18, C14.

**TABLEAU II**

| | Diamide UDETA en C18 | Diamide UDETA en C14 |
|---|---|---|
| Températures de fusion au pic (°C) 1^{er}/2^{eme}/3^{eme} 4/^{eme}/5^{eme} cycle | 179/177/177/176/176 | 186/181/180/179/178 |
| Températures de cristallisation au pic (°C) 1^{er}/2^{eme}/3^{eme} 4/^{eme}/5^{eme} cycle | 150/149/149/148/147 | 144/143/141/140/138 |
| Enthalpies de fusion (J/g) 1^{er}/2^{eme}/3^{eme} 4/^{eme}/5^{eme} cycle | 147/146/144/141/138 | 157/146/144/141/137 |
| Enthalpies de cristallisation (J/g) 1^{er}/2^{eme}/3^{eme} 4/^{eme}/5^{eme} cycle | 136/135/132/132/130 | 132/129/128/126/124 |

Il est encore à noter que malgré des montées en température allant jusqu'à 250°C, les produits continuaient à fondre et à cristalliser de manière assez reproductible, ce qu'on peut voir notamment par la stabilité des températures des pics de fusion et cristallisation et des valeurs d'enthalpies. En plus, la perte de masse était pratiquement nulle (<1 mg) après ces cycles.

### 2C- Essai sur 5 cycles à 5°C/min

Le Tableau III montre les valeurs des températures aux pics de fusion et de cristallisation pour 2 des diamides d'UDETA synthétisés (C18, C14), lors des essais sur 5 cycles de chauffage/refroidissement à 5°C/min entre 80°C et 230°C. Les enthalpies de fusion et de cristallisation sont également données. Après les cinq cycles, les pertes de masse ont été quantifiées par pesage de la capsule contenant l'échantillon et par différence de poids avec le poids initial avant l'essai. Les pertes de masse étaient respectivement de 0,3 et 0,2 mg après cinq cycles, pour les diamides en C18, C14.

**TABLEAU III**

| | Diamide UDETA en C18 | Diamide UDETA en C14 |
|---|---|---|
| Températures de fusion au pic (°C) 1^{er}/2^{eme}/3^{eme} 4/^{eme}/5^{eme} cycle | 177/177/177/177/176 | 187/187/183/182/181 |
| Températures de cristallisation au pic (°C) 1^{er}/2^{eme}/3^{eme} 4/^{eme}/5^{eme} cycle | 152/152/151/151/151 | 148/148/147/146/146 |
| Enthalpies de fusion (J/g) 1^{er}/2^{eme}/3^{eme} 4/^{eme}/5^{eme} cycle | 161/165/145/142/142 | 149/138/141/138/140 |
| Enthalpies de cristallisation (J/g) 1^{er}/2^{eme}/3^{eme} 4/^{eme}/5^{eme} cycle | 140/139/137/138/136 | 133/132/132/131/130 |

### 2D- Essai sur 1 cycle à 1°C/min

Le Tableau IV montre les valeurs des températures aux pics de fusion et de cristallisation pour 2 des diamides UDETA synthétisés (C18, C14), lors des essais sur 1 cycle de chauffage/refroidissement à 1°C/min entre 80°C et 220°C. Les enthalpies de fusion et de cristallisation sont également données. Après ce cycle, les pertes de masse ont été quantifiées par pesage de la capsule contenant l'échantillon et par différence de poids avec le poids initial avant l'essai. Les pertes de masse étaient respectivement de 0,7 et 0,3 mg pour les diamides en C18, C14.

**TABLEAU IV**

| | Diamide UDETA en C18 | Diamide UDETA en C14 |
|---|---|---|
| Température de fusion au pic (°C) | 186 | 191 |
| Température de cristallisation au pic (°C) | 157 | 154 |
| Enthalpie de fusion (J/g) | 152 | 141 |
| Enthalpie de cristallisation (J/g) | 145 | 139 |

Globalement, la diminution de la vitesse de rampe permettait d'améliorer la reproductibilité des mesures. Elle avait également un effet d'augmentation sur les températures de fusion et cristallisation, ainsi que sur les enthalpies de changement de phase. La stabilité thermique, reflétée par une faible perte de masse des échantillons (< 1 mg), restait remarquable.

### 2E- Essai sur 10 cycles à 10°C/min

Le Tableau V montre les valeurs des températures aux pics de fusion et de cristallisation pour 2 des diamides d'UDETA synthétisés (C18, C14), lors des essais sur 10 cycles de chauffage/refroidissement à 10°C/min entre 80°C et 220°C. Les enthalpies de fusion et de cristallisation sont également données. Après les dix cycles, les pertes de masse ont été quantifiées par pesage de la capsule contenant l'échantillon et par différence de poids avec le poids initial avant l'essai. Les pertes de masse étaient respectivement de 0,1 et 0,1 mg après dix cycles, pour les diamides en C18, C14.

**TABLEAU V**

| | Diamide UDETA en C18 | Diamide UDETA en C14 |
|---|---|---|
| Températures de fusion au pic (°C) 1^{er}/2^{eme}/3^{eme} 4/^{eme}/5^{eme} /6^{eme}/7^{eme}/8^{eme}/9^{eme}/10^{eme} cycle | 178/178/178/178 /178/ 178/177/177/177 /177 | 189/185/185/184 /184/ 184/183/183/183 /183 |
| Températures de cristallisation au pic (°C) 1^{er}/2^{eme}/3^{eme} 4/^{eme}/5^{eme}/6^{eme}/7^{eme}/8^{eme}/9^{eme}/ 10^{eme} cycle | 151/150/150/149 /149/ 149/149/148/148 /148 | 146/145/145/144 /144/ 144/144/143/143 /143 |
| Enthalpies de fusion (J/g) 1^{er}/2^{eme}/3^{eme} 4/^{eme}/5^{eme}/6^{eme}/7^{eme}/8^{eme}/9^{eme}/ 10^{eme} cycle | 139/148/147/145 /145/ 145/144/145/144 /144 | 152/143/142/141 /142/ 141/141/142/142 /140 |
| Enthalpies de cristallisation (J/g) 1^{er}/2^{eme}/3^{eme} 4/^{eme}/5^{eme}/6^{eme}/7^{eme}/8^{eme}/9^{eme}/ 10^{eme} cycle | 139/139/138/137 /137/ 135/135/136/136 /136 | 130/130/130/130 /127/ 127/127/127/127 /128 |

Après dix cycles, les valeurs des températures de fusion et de cristallisation, ainsi que les enthalpies correspondantes, tendaient à se stabiliser et la précision de la mesure était améliorée. Après 10 cycles également, les pertes de masses restaient pratiquement négligeables (<0,5 mg).

### Exemple comparatif 1

A titre de comparaison, des expériences de DSC similaires à celles de l'Exemple 2 ont été conduites sur de l'acide sébacique, diacide ayant servi de matière première à la synthèse du diamide en C10 de l'Exemple 1. Sur 3 cycles à 10°C/min, l'acide sébacique présentait des températures de fusion et de cristallisation inférieures à 150°C (135°C pour la fusion, 117°C pour la cristallisation), même si les enthalpies de transition de phase étaient supérieures à celles du diamide (env. 200 J/g).

Un problème récurrent avec l'acide sébacique était la facilité avec laquelle les échantillons perdaient en masse pendant les expériences de DSC, phénomène absolument pas présent dans le cas du diamide correspondant. Ainsi, par exemple, lors de deux expériences différentes conduites respectivement sur 5 cycles entre 80°C et 250°C à 10°C/min, ainsi que sur 5 cycles entre 80 et 230°C à 5°C/min, les pertes de masse ont été respectivement de 6,4 et de 7,2 mg, c'est-à-dire supérieures à 70% de la masse initiale de l'échantillon. Bien qu'il ne soit pas possible de préciser avec certitude si ces pertes étaient liées à une évaporation avec ou sans dégradation, d'un point de vue de l'utilisation de ces produits à de hautes températures, cela pose un problème, absent dans le cas des diamides correspondants. Une analyse plus fine des données DSC laisse penser que la perte de matière se produisait à partir de 200°C.

Ainsi, le diacide sébacique n'est pas utilisable comme matériau à changement de phase dans la plage 150-200°C, contrairement au diamide correspondant (diamide en C10) selon l'invention, qui présente en outre une remarquable stabilité (peu ou pas de perte de masse, reproductibilité des transitions) jusqu'à au moins 250°C.

### Exemple 3 : Synthèse de dinitriles

Dans un réacteur agité de 41, muni d'un déphlegmateur, d'une canne d'introduction d'ammoniac, d'un système d'inertage à l'azote et d'un chauffage électrique, on a chargé 2 kg (9,9 M) d'acide sébacique à l'état solide (point de fusion : 130-135°C) et 1,25g d'oxyde de zinc. La température a été portée graduellement sans agitation jusqu'à fusion de l'acide (140°C) puis sous agitation jusqu'à 220°C. Le déflegmateur était chauffé à 130°C. On a commencé à introduire l'ammoniac à un débit nominal de 0,417 1/mn et par kg, puis on a monté progressivement la température de réaction jusqu'à 300°C. La température de 300°C et l'introduction d'ammoniac ont été maintenus en palier jusqu'à ce que l'on atteigne un indice d'acidité IA < 0,1 mg de KOH / g. L'eau formée et l'ammoniac en excès ont été collectés dans un piège à froid. En fin de réaction, le milieu réactionnel a été transféré dans le bouilleur d'un montage de distillation. Le brut a été distillé sous pression réduite à environ 30-40 mm de Hg. Le rendement en sébaçonitrile était de 91% et sa pureté était supérieure à 99%.

De manière similaire, en partant de l'acide 1,14-tétradécanedioïque, on a obtenu le 1,12-dodécanedinitrile avec un rendement de 89% et une pureté supérieure à 99%. En partant de l'acide 1,18-octadécanedioïque, on a obtenu le 1,16-hexadécanedinitrile avec un rendement de 90% et une pureté supérieure à 99%.

### Exemple 4 : Analyse par DSC des dinitriles

Des analyses calorimétriques par DSC ont été effectuées comme expliqué dans l'exemple 2, sur les dinitriles synthétisés dans l'exemple 3. La zone de fusion/cristallisation ayant, lors d'un balayage exploratoire, été identifiée comme située en dessous de 120°C, des balayages à 10°C/min de vitesse de rampe en montée et en descente ont été effectués entre -40°C et 120°C. Le Tableau VI montre les valeurs des points de fusion et recristallisation, ainsi que des enthalpies des transitions correspondantes (fusion ou cristallisation) pour deux dinitriles. Les valeurs obtenues correspondent au troisième balayage à 10°C/min, sachant que les courbes de DSC entre le 2^{ème} et 3^{ème} balayage sont superposables, ce qui traduit la bonne répétabilité de la mesure.

**TABLEAU VI**

| | 1,16 hexadécadinitrile | 1,12 dodécadinitrile |
|---|---|---|
| Température de fusion au pic (°C) | 60 | 38 |
| Température de cristallisation au pic (°C) | 47 | 26 |
| Enthalpie de fusion (J/g) | 195 | 186 |
| Enthalpie de cristallisation (J/g) | 191 | 184 |

### Exemple 5 : Synthèse de bisamides en C10

Dans un réacteur en verre de 0,5 L, muni d'un déflegmateur, d'une agitation mécanique, d'un système d'introduction d'ammoniac gazeux et d'un système de chauffage électrique, on a chargé 180 g soit 0,9M d'acide sébaçique.
On a porté le milieu réactionnel à 140°C de façon à fondre le diacide. On a mis l'agitation en route et on a porté la température à 220°C de façon à être au-dessus du point de fusion du sébaçamide que l'on voulait former. On a introduit ensuite progressivement l'ammoniac au moyen d'une canne plongeante. On a maintenu la température à 220°C pendant toute la durée de la réaction soit 4h. On a suivi l'avancement de la réaction par l'indice d'acidité du milieu réactionnel et le dosage des fonctions amides. L'eau formée et l'ammoniac en excès ont été distillés du milieu réactionnel. En fin de réaction, on a coulé le sébaçamide à l'état fondu qui a été obtenu avec un rendement pratiquement quantitatif.

### Exemple 6 : Analyse par DSC des bisamides en C10

On a effectué des essais calorimétriques par DSC à l'aide d'un appareil DSC 821 commercialisé par la société Mettler-Toledo en utilisant des cellules en inox 30 µl sur le sébaçamide synthétisé à l'exemple 5. Il a été réalisé des cycles entre 25°C et 280°C à 5°C/min. Deux cycles de chauffage/refroidissement ont été effectués. Une première série de balayages entre 25°C et 280°C a permis d'identifier la zone des températures des transitions de phase de fusion (au chauffage) et de cristallisation (au refroidissement). Cette première série a permis de montrer qu'aucun phénomène thermique de transition de phase n'était observé en-deçà de 25-50°C.

### 6A- Essai sur 2 cycles à 5°C/min

Le Tableau VII montre les valeurs des températures aux pics de fusion et de cristallisation pour le sébaçamide synthétisé à l'exemple 5, lors des essais sur 2 cycles de chauffage/refroidissement à 5°C/min entre 25°C et 280°C. Les enthalpies de fusion et de cristallisation sont également données.

**TABLEAU VII**

| | Sébaçamide |
|---|---|
| Températures de fusion au pic (°C) 1^{er}/2^{eme}cycle | 205/204 |
| Températures de cristallisation au pic (°C) 1^{er}/2^{ème}cycle | 166/163 |
| Enthalpies de fusion (J/g) 1^{er}/2^{ème}cycle | 236/226 |
| Enthalpies de cristallisation (J/g) 1^{er}/2^{ème}cycle | 215/209 |

On constate que les enthalpies de fusion et de cristallisation du sébaçamide entre le premier cycle et le second cycle demeurent voisines surtout pour la fusion. Cela montre la stabilité thermique du sébaçamide.

### Exemple comparatif 2

A titre de comparaison, des expériences de DSC similaires à celles de l'exemple 6 ont été conduites sur de l'adipamide (bisamide en C6), commercialisé par la société Aldrich. Les résultats sont donnés dans le tableau VIII.

**TABLEAU VIII**

| | Adipamide |
|---|---|
| Températures de fusion au pic (°C) 1^{er}/2^{ème}cycle | 228/216 |
| Températures de cristallisation au pic (°C) 1^{er}/2^{ème}cycle | 182/180 |
| Enthalpies de fusion (J/g) 1^{er}/2^{ème}cycle | 340/270 |
| Enthalpies de cristallisation (J/g) 1^{er}/2^{eme}cycle | 252/206 |

On constate que les écarts des enthalpies de fusion et de cristallisation entre le premier cycle et le second cycle pour l'adipamide sont nettement supérieurs à ceux constatés pour le sébaçamide. Cela montre la plus grande stabilité thermique du sébaçamide par rapport à l'adipamide.

## Revendications

1. Utilisation d'un composé constitué d'une chaîne hydrocarbonée linéaire en C₈-C₂₄ portant à chaque extrémité un groupe fonctionnel azoté, autre que -NH₂, pour le stockage d'énergie thermique, dans laquelle ledit composé est choisi parmi :
- les bisamides de formule (I) :
R₁R₂N-CO- (CH₂)ₙ-CO-NR₁R₂ (I)
où n est un entier allant de 8 à 24 et R₁, R₂ désignent indépendamment un atome d'hydrogène ; un groupe alkyle en C₁-C₁₀; un groupe Ra-N-RbRc où Ra est une chaîne -(CH₂)ₓ-(NH-CH₂-CH₂)ₘ- où m est un entier allant de 0 à 6, x est un entier allant de 1 à 4 et Rb, Rc sont chacun H ou forment ensemble et avec l'atome d'azote auquel ils sont reliés un hétérocyçlé azoté éventuellement interrompu par au moins un autre atome d'azote et éventuellement substitué par un groupe oxo,
- les dinitriles de formule (II) :
N≡C-(CH₂)ₚ-C≡N (II)
où p est un entier allant de 8 à 24, de préférence de 8 à 16,
- les polyamines de formule (III) ;
R₃R₄N-(CH₂)_{q}-NR₃R₄ (III)
où q est un entier allant de 8 à 24 ; R₃ est un groupe propylamine, polypropylamine alkylcarbonyle ou alkylsulfonyle renfermant éventuellement un motif alcoxylé (CH₂-CH₂-O)_{y} ; et R₄ est H ou un groupe propylamine,_polypropylamine_alkylcarbonyle ou alkylsulfonyle renfermant éventuellement un motif alcoxylé (CH₂-CH₂-O)_{y} où y est un entier allant de 1 à 6.

2. Utilisation selon la revendication 1, dans laquelle ladite chaîne hydrocarbonée linéaire renferme de 10 à 18 atomes de carbone.

3. Utilisation selon l'une quelconque des revendications 1 et 2, dans laquelle n est un entier allant de 8 à 16, R₁ = H et R₂ = Ra-N-RbRc où Ra est une chaîne -CH₂-CH₂- et Rb, Rc forment un hétérocycle diazoté saturé à cinq ou six chaînons avec l'atome d'azote auxquels ils sont reliés.

4. Utilisation selon la revendication 3, dans laquelle ledit composé est le bisamide d'UDETA et d'un acide dicarboxylique d'origine végétale.

5. Utilisation selon l'une quelconque des revendications 1 à 4, dans laquelle ledit composé est inclus dans un dispositif adapté au refroidissement de produits alimentaires, de produits pharmaceutiques sensibles à la chaleur, de matériaux textiles, de moteurs ou de composants et circuits électroniques, à la récupération de chaleur de réacteurs chimiques ou d'installations de combustion de déchets ou au stockage d'énergie solaire.

6. Procédé de stockage et éventuellement de restitution d'énergie thermique, comprenant la mise en contact d'une paroi à refroidir avec un premier fluide caloporteur puis la mise en contact dudit premier fluide caloporteur avec un matériau comprenant au moins un composé tel que défini dans l'une quelconque des revendications 1 à 4, et éventuellement la mise en contact dudit matériau avec un second fluide caloporteur puis éventuellement dudit second fluide caloporteur avec une paroi à réchauffer.

## Patentansprüche

1. Verwendung einer Verbindung, die aus einer linearen C₈-C₂₄-Kohlenwasserstoffkette mit einer stickstoffhaltigen funktionellen Gruppe, die von -NH₂ verschieden ist, an jedem Ende besteht, wobei die Verbindung ausgewählt ist aus:
- den Bisamiden der Formel (I):
R₁R₂N-CO- (CH₂)ₙ-CO-NR₁R₂ (I)
wobei n für eine ganze Zahl im Bereich von 8 bis 24 steht und R₁ und R₂ unabhängig für ein Wasserstoffatom; eine C₁-C₁₀-Alkylgruppe; eine Ra-N-RbRc-Gruppe, wobei Ra für eine -(CH₂)ₓ-(NH-CH₂-CH₂)ₘ-Kette steht, wobei m für eine ganze Zahl im Bereich von 0 bis 6 steht, x für eine ganze Zahl im Bereich von 1 bis 4 steht und Rb und Rc jeweils für H stehen oder zusammen und mit dem Stickstoffatom, an das sie gebunden sind, einen stickstoffhaltigen Heterocyclus bilden, der gegebenenfalls durch mindestens ein weiteres Stickstoffatom unterbrochen und gegebenenfalls durch eine Oxogruppe substituiert ist,
- den Dinitrilen der Formel (II):
N≡C-(CH₂)ₚ-C≡N (II)
wobei p für eine ganze Zahl im Bereich von 8 bis 24 und vorzugsweise 8 bis 16 steht,
- den Polyaminen der Formel (III):
R₃R₄N-(CH₂)_{q}-NR₃R₄ (III)
wobei q für eine ganze Zahl im Bereich von 8 bis 24 steht; R₃ für eine Propylamin-, Polypropylamin-, Alkylcarbonyl- oder Alkylsulfonylgruppe, die gegebenenfalls eine alkoxylierte Einheit (CH₂-CH₂-O)_{y} enthält, steht und R₄ für H oder eine Propylamin-, Polypropylamin-, Alkylcarbonyl- oder Alkylsulfonylgruppe, die gegebenenfalls eine alkoxylierte Einheit (CH₂-CH₂-O)_{y} enthält, steht, wobei y für eine ganze Zahl im Bereich von 1 bis 6 steht.

2. Verwendung nach Anspruch 1, wobei die lineare Kohlenwasserstoffkette 10 bis 18 Kohlenstoffatome enthält.

3. Verwendung nach einem der Ansprüche 1 und 2, wobei n für eine ganze Zahl im Bereich von 8 bis 16 steht, R₁ = H und R₂ = Ra-N-RbRc, wobei Ra für eine -CH₂-CH₂-Kette steht und Rb und Rc mit dem Stickstoffatom, an das sie gebunden sind, einen fünf- oder sechsgliedrigen gesättigten zweistickstoffhaltigen Heterocyclus bilden.

4. Verwendung nach Anspruch 3, wobei es sich bei der Verbindung um das Bisamid von UDETA und einer Dicarbonsäure pflanzlichen Ursprungs handelt.

5. Verwendung nach einem der Ansprüche 1 bis 4, wobei die Verbindung in einer Vorrichtung zur Kühlung von Lebensmittelprodukten, wärmeempfindlichen pharmazeutischen Produkten, Textilmaterialien, Motoren oder elektronischen Bauteilen und Schaltungen, zur Rückgewinnung von Wärme aus chemischen Reaktoren oder Abfallverbrennungsanlagen oder zur Speicherung von Solarenergie enthalten ist.

6. Verfahren zur Speicherung und gegebenenfalls zur Wiederabgabe von Wärmeenergie, bei dem man eine abzukühlende Wand mit einem ersten Wärmeübertragungsfluid in Berührung bringt und dann das erste Wärmeübertragungsfluid mit einem Material, das mindestens eine Verbindung gemäß einem der Ansprüche 1 bis 4 umfasst, in Berührung bringt und gegebenenfalls das Material mit einem zweiten Wärmeübertragungsfluid und dann gegebenenfalls das zweite Wärmeübertragungsfluid mit einer zu erwärmenden Wand in Berührung bringt.

## Claims

1. Use of a compound consisting of a linear C₈-C₂₄ hydrocarbon-based chain bearing at each end a nitrogen-containing functional group, other than -NH₂, for the storage of thermal energy, in which said compound is chosen from:
- the bisamides of formula (I):
R₁R₂N-CO- (CH₂)ₙ-CO-NR₁R₂ (I)
where n is an integer ranging from 8 to 24 and R₁, R₂ independently denote a hydrogen atom; a C₁-C₁₀ alkyl group; a group Ra-N-RbRc where Ra is a -(CH₂)ₓ-(NH-CH₂-CH₂)ₘ- chain where m is an integer ranging from 0 to 6, x is an integer ranging from 1 to 4 and Rb, Rc are each H or form together and with the nitrogen atom to which they are attached a nitrogen-containing heterocycle optionally interrupted by at least one other nitrogen atom and optionally substituted by an oxo group,
- the dinitriles of formula (II):
N≡C-(CH₂)ₚ-C≡N (II)
where p is an integer ranging from 8 to 24, preferably from 8 to 16,
- the polyamines of formula (III):
R₃R₄N-(CH₂)_{q}-NR₃R₄ (III)
where q is an integer ranging from 8 to 24; R₃ is a propylamine, polypropylamine, alkylcarbonyl or alkylsulphonyl group optionally containing an alkoxylated unit (CH₂-CH₂-O)_{y}; and R₄ is H or a propylamine, polypropylamine, alkylcarbonyl or alkylsulphonyl group optionally containing an alkoxylated unit (CH₂-CH₂-O)_{y} where y is an integer ranging from 1 to 6.

2. Use according to Claim 1, in which said linear hydrocarbon-based chain contains from 10 to 18 carbon atoms.

3. Use according to either of Claims 1 and 2, in which n is an integer ranging from 8 to 16, R₁ = H and R₂ = Ra-N-RbRc where Ra is a -CH₂-CH₂- chain and Rb, Rc form a five- or six-membered saturated dinitrogen-containing heterocycle with the nitrogen atom to which they are attached.

4. Use according to Claim 3, in which said compound is the bisamide of UDETA and of a dicarboxylic acid of plant origin.

5. Use according to any one of Claims 1 to 4, in which said compound is included in a device suitable for cooling food products, heat-sensitive pharmaceutical products, textile materials, engines or electronic components and circuits, for the heat recovery of chemical reactors or waste combustion plants or for the storage of solar energy.

6. Process for the storage and optionally for the release of thermal energy, comprising the contacting of a wall to be cooled with a first heat transfer fluid then the contacting of said first heat transfer fluid with a material comprising at least one compound as defined in any one of Claims 1 to 4, and optionally the contacting of said material with a second heat transfer fluid then optionally of said second heat transfer fluid with a wall to be heated.
